# EUROPEAN PATENT SPECIFICATION

(11) **EP 0 976 074 B1**
(45) Date of publication and mention of the grant of the patent: **05.11.2003**
(21) Application number: 97903447.7
(22) Date of filing: 12.02.1997
(51) Int. Cl.: G06F 9/46, H04Q 3/00

(54) **SERVICE PROVISION SYSTEM FOR USE IN DISTRIBUTED PROCESSING ENVIRONMENTS**
SERVICEBEREITSTELLUNGSSYSTEM ZUR VERWENDUNG IN VERTEILTEN VERARBEITUNGSUMGEBUNGEN
SYSTEME D'EVALUATION DE LA QUALITE DU SERVICE PREVU POUR ETRE UTILISE DANS DES ENVIRONNEMENTS DCE

(30) Priority: 12.02.1996 EP 96300961; 12.02.1996 GB 9602780; 11.04.1996 GB 9607504
(43) Date of publication of application: 02.02.2000
(73) Proprietor: BRITISH TELECOMMUNICATIONS public limited company, London EC1A 7AJ (GB)
(72) Inventor: O'BRIEN, Paul, Declan, Woodbridge, Suffolk IP12 1DD (GB); WIEGAND, Mark, Eric, Woodbridge, Suffolk IP12 1LD (GB)
(74) Representative: Dutton, Erica L. G.
(86) International application number: GB9700395
(87) International publication number: WO97029443

(56) References cited:
- WO-A-94/27411
- PROCEEDINGS OF THE 7TH AUSTRALIAN JOINT CONFERENCE ON ARTIFICIAL INTELLIGENCE, November 1994, ARMIDALE, N.S.W., AUSTRALIA, pages 1-12, XP000603182 SYCARA: "The Present and Future of DAI: a Study in Enterprise Integration"
- INTERNATIONAL JOURNAL OF INTELLIGENT AND COOPERATIVE INFORMATION SYSTEMS, vol. 1, no. 2, 1992, pages 291-317, XP000603307 LAASRI ET AL: "A Generic Model for Intelligent Negotiating Agents"
- KNOWLEDGE ENGINEERING REVIEW, vol. 10, no. 2, June 1995, UK, pages 115-152, XP000671466 WOOLDRIDGE ET AL: "Intelligent Agents: Theory and Practice" cited in the application
- INTELLIGENT SYSTEMS ENGINEERING, vol. 1, no. 2, 1 January 1992, pages 102-114, XP000365082 JENNINGS N R: "GRATE: A GENERAL FRAMEWORK FOR CO-OPERATIVE PROBLEM SOLVING" cited in the application
- ARTIFICIAL INTELLIGENCE, vol. 75, no. 2, June 1995, NETHERLANDS, pages 195-240, XP000671465 JENNINGS: "Controlling cooperative problem solving in industrial multi-agent systems using joint intentions" cited in the application
- PROCEEDINGS OF THE 2ND INTERNATIONAL CONFERENCE ON SERVICES IN DISTRIBUTED AND NETWORKED ENVIRONMENTS, June 1995, WHISTLER, BRITISH COLUMBIA, CANADA, pages 60-67, XP000603175 MILOSEVIC ET AL: "Supporting Business Contracts in Open Distributed Systems"
- IEEE JOURNAL ON SELECTED AREAS IN COMMUNICATIONS, vol. 13, no. 7, September 1995, USA, pages 1150-1161, XP000601895 JORDAN ET AL: "Connection Establishment in High-Speed Networks"
- INTERNATIONAL WORKSHOP ON OPEN DISTRIBUTED PROCESSING, vol. C-1, October 1991, BERLIN, GERMANY, pages 397-399, XP000603189 VON BECHTOLSHEIM: "Transaction Costs in Agent Systems - An Economic Perspective on the Coordination Problem in Distributed Systems"
- BT TECHNOLOGICAL JOURNAL, vol. 13, no. 2, April 1995, IPSWICH, GB, pages 120-131, XP000500764 MARTIN: "Twenty twenty vision - software architectures for intelligence into the 21st century"

## Description

The present invention relates to service provision systems for use in distributed processing environments.

Distributed processing environments are being found increasingly useful. Distributed processing describes the case where computing processing capacity is no longer centralised, for instance at a mainframe installation, but can be situated at various different sites with communication links between. Client/server architectures are a form of distributed processing environment in which one computer application, or software process, may itself be distributed between two or more computing platforms. These computing platforms may be for instance personal computers linked by a network such as a local area network (LAN).

It is sometimes necessary, in any computing environment, to support an operation by using a set of different processes. These processes may be colocated or installed at different physical locations. The processes may for instance comprise several processes for providing information and a process for performing a security check on the intended recipient of the information.

In an example, managers in organisations need to be able to make decisions based on information from marketing, sales, research, development, manufacturing, finance and legal departments. They also may need to be able to meet for instance a stringent security process designed to avoid the information falling into the wrong hands. Requesting pertinent and consistent information across a large company can be complex and time consuming, particularly where there are other processes involved as well. Then too, changes to information made in one department can have repercussions throughout a company often invalidating previous decisions.

Another example of a multi-process activity might be account set up. This might require the gathering of information from various sources, the use of a security process to screen the new account holder, the triggering of scheduling for account statements and other processes.

To set up an overall service may thus in fact rely on several component processes, each of which may have its own availability requirements in terms of, for instance, storage capacity, communication bandwidth, time to delivery and the like.

A software agent is usually a module of software which comprises process software and data, or means to access data. Agents are described and discussed in "Intelligent Agents: Theory and Practice" by M.J. Woodhouse and N.R. Jennings (1995), The Knowledge Engineering Review, Volume 10(2) 115-152. A software agent based system is described in "GRATE: A General Framework for Co-operative Problem Solving" by N.R. Jennings, E.H. Mamdani, I. Laresgoiti, J. Perez and J. Corerea (1992), IEEE-BCS Journal of Intelligent Systems Engineering, 1(2) 102-114. This system is based on a community of agents, known as GRATE agents, and has a flat organisation having no centralised or hierarchical structure. Each agent has three primary modules, the situation assessment, control and co-operation modules. The control module provides the interface to the underlying domain level system, the situation assessment module decides which activities should be performed locally and which should be delegated and controls individual performance of tasks, and the co-operation module looks after co-operation protocols for the agent such as client-server and contract net.

As always, it is preferable that the time to actual provision and receipt of a service is not too long. Hence it is commonly preferable that, in any environment in which different processing capacities might have to be brought together in the provision of a service, the time to set up those different processing capacities is kept low.

In accordance with one aspect, the present invention provides a service provision system for use in distributed processing environments, said system comprising:
an input for receiving a service request;
service request processing means for identifying one or more component processes for use in provisioning the requested service;
negotiation means for negotiating with an entity or entities for providing each component process to establish conditions applicable to provision of the component process(es);
means to access an up-datable data store for storing conditions when established; and
an output for providing a response to the service request, said response comprising an indication of availability of the requested service;
the service request processing means being adapted to process a service request by accessing one or more of the conditions in the data store, processing the request using the one or more conditions, and producing said response,
characterised in that said negotiation means is adapted to assemble said conditions in the data store proactively by negotiation prior to receipt of said service request.

A component process might be supplied for instance by another system and/or by process capacity within the same system.

Thus, although embodiments of the present invention are equipped to negotiate for provision of component processes to provide a service, an initial indication of availability of a service is made from stored data, rather than from real-time negotiation to establish conditions of service provision. This has the advantage of speed since, as mentioned above, the real-time negotiation, in practice, can create delay.

The processing means may first identify the component processes which will be required in provision of the requested service, and access parameters in respect of those component processes, or may have one or more parameters stored in relation to the service as a whole.

A system as described above can be embodied as a software "agent". The process software usually at least includes a negotiation process, for negotiating with other agents, and the data available usually includes both data which is local, or specific, to the agent, and data which has a global nature with regard to an overall system comprising the agents.

A system according to an embodiment of the present invention might itself be an agent. It might comprise processing and resource capacity for providing at least part of a component process or resource required to provide a service. The system however might preferably comprise a plurality of the above modules, or agents, each agent comprising (or having control of) capacity for providing at least part of a component process or resource.

The "parameters indicative of availability" mentioned above might be in the form of a set of conditions or rules, and/or data, under which a component process or resource can be provided, sometimes known as a "service level agreement" (SLA), from one agent to another or by an agent in direct provision of a service.

Where the system comprises a plurality of the modules, or agents, then the availability of a service may be indicated by the SLAs of and between the agents which will be required in provision of the service. The agents may then have a "peer to peer" relationship in which the status of all the agents is substantially equal in a team of agents brought together for the purose of providing a service. Alternatively, there can be advantages in the agents having a hierarchical relationship in which a primary agent may have availability data for a group of "subordinate" agents. That is, the primary agent may have stored an SLA indicative of its own capability to provide a service, which SLA is determined by a predetermined set of other SLAs, these being the SLAs of the subordinate agents.

Such a hierarchy can be complex in that it may have more than one layer of subordinate agents. It can increase efficiency in estimating availability of a service since a primary agent may be able to substitute one whole group of subordinate agents for another group, in the event that the first group was not compatible with an SLA negotiated by the primary agent.

In embodiments of this type, it can be advantageous if at least some of the SLAs have a limited lifetime: a "time out" mechanism. Otherwise, actual conditions may render an SLA unsupportable, or at best misleading, by being out of date. This is particularly advantageous if the system encompasses proactive versions of services in which the system might for instance alert a user to information in relation to a service. If a relevant SLA times out, this works to reduce the possibility that the system will provide out of date or inappropriate prompts or data items.

The term "entity" may be used in the following specification. It will be understood that the term "entity" as used here can mean a piece of equipment which can communicate in a computing environment. It will in practice usually comprise at least an input and an output and, often, some means for delivering one or more of the services, or component processes, to be provided. It might be for instance a work station, personal computer or a computing network node.

In embodiments of the invention, a system will generally further comprise a control output connected to one or more tasks (component processes) and/or resources required in providing a service.

The system may also comprise a data input connected in said computing environment to one or more tasks and/or resources required to provide the service, for receiving data output by the tasks and/or processes, and data processing means to generate said parameters from said data. Alternatively, it may be that the data output by the tasks and/or processes already comprises said parameters.

Preferably, a system according to an embodiment of the invention further includes scheduling means for scheduling the running of component processes and provision of resources in support of a service. However, on receipt of a service request, the scheduling means is preferably triggered after outputting of a response to a service request to indicate availability. This avoids delay in indicating availability caused for instance by any detailed processing and co-ordinating of scheduling data or conditions.

Once a system has agreed to provide a service, it can schedule the use of its resources to support the delivery of that service. Hence embodiments of the present invention provide a method of providing a service, in a communications environment, which comprises receiving a request for a service, accessing one or more stored parameters indicating availability of the service, providing an output based on the parameter(s) and subsequently scheduling resources and processing capacity for provision of the service.

Further to the above, in embodiments of the present invention, relevant information may be pro-actively identified and delivered to parties which have not specifically requested the information but which nonetheless are believed to have an interest in the information. Such an ability to disseminate information is useful particularly for parties, for example decision-makers or service requesters, who might be unaware that the information exists. The information dissemination might happen as the information becomes available or when the party initiates a service to which said information might be relevant.

Systems according to embodiments of the present invention can be used to enhance the way a large company runs its business by improving the way it accesses, uses and adds value to its vast quantities of information. The metaphor of 'concurrent engineering' suggests that the best way to achieve a business activity is to bring together as early as possible all the necessary information, resources and skills that are needed to execute that activity.

Further embodiments of the present invention particularly support the concept of a virtual organisation comprising two or more actual organisations which are linked for a defined period of time, for example by a business agreement or contract, and are treated for the purposes of the present invention as a single organisation. Under these conditions the or some of the resources associated with each organisation become available to the overall system. Such virtual organisations by their nature are subject to strict mechanisms that control which, and to what extent, transactions between the actual organisations can be carried out.

Embodiments of the present invention can provide the following activites:
(i) allow the decision maker to access relevant information wherever it is situated in the organisation (this should be possible despite the fact that information may be stored in many different types of system and in many different information models);
(ii) allow the decision maker to request and obtain information management services from other departments within the organisation (and in some cases even from outside the organisation);
(iii) proactively identify and deliver timely, relevant information which may not have been explicitly asked for (e.g. because the decision maker is unaware of its existence);
(iv) inform the decision maker of changes which have been made elsewhere in the business process which impinge upon the current decision context; and
(v) identify the parties who may be interested in the outcome and results of the decision making activity.

As mentioned above, an advantage of embodiments of the present invention is that a decision to provide a service is based on stored parameters and not on real-time or near real-time information of the resources required to provide the service: there is no need to perform a detailed analysis of the resources available to the system before a decision is reached. The system bases its decisions on an estimation of the capacity of the system to provide a service at the requested time.

The stored parameters might include the average time a service is expected to take, the expected cost of performing tasks to provide a service and/or the amount of work already being done by the system. Other information can also be used to determine on what grounds a service will be provided, for example past experience of any dealings with the same entity.

Although the lack of a detailed resource analysis during provisioning does increase the risk that once a service has been negotiated for it might not be possible to complete it, such failure can be dealt with acceptably, as described in more detail below.

The processing means is typically adapted to receive data from a resource(s) for use in updating the data store. Such data might comprise a measure of capability of the system on the basis of the past performance of the resources. For example, each time a service has been provided by the system, information about how well the resources performed may be used to adjust the parameter(s). Performance information might include actual cost data and actual time taken to provide a required output. The information might also include task current status information which is readily available to the system.

In some embodiments, the system comprises a request output connected to a distributed computing environment for requesting a component service or process from another entity. A component service, or sub-service, is one which the system requires in order to provide its service. For example, if the service requested is to open a new business account, a sub-service might be the task of checking the financial viability of the prospective account holder. This sub-service would typically be provided by an entity which could be another system, or maybe even a human operator.

In some embodiments, the system comprises means for scheduling resource(s) to provide a service. Preferably, in this case, the processing means is adapted, in response to a failure by the scheduling means to schedule a resource, in time to complete a service, to:
- re-schedule the task/service;
- transmit a message to the entity that the originally requested service can only be provided under different conditions;
- re-locate the service with another service providing entity; or
- indicate to the entity that the service cannot be provided.
These possible actions give the system flexibility to deal with problems which might arise with the provision of a service.

The above-mentioned steps for recovery can be similarly applied to the case where a service fails during operation. A resource might become unavailable, for example, due to a break in communications.

In general therefore, the system may further comprise means for monitoring for failure, such as of scheduling means. In order to act on detection of a failure, the system may then be adapted to initiate a modified response output in respect of a relevant service request. It may further be adapted to store service requests and to be triggered on detection of failure to identify and access the relevant stored process request, to reprocess it using one or more modified parameters from the updatable data store, and to provide a modified response output.

In embodiments of the invention, the system is arranged to provide more than one instance of a service, and/or of a negotiation for a service, to one or more requesting entities concurrently. An advantage of this aspect is that the system is available for use by plural service requesters. In this respect, preferably, at least some resources as well can support multiple resource requests concurrently.

In accordance with a further aspect, the present invention provides a method of business process enactment, said method being implemented in a distributed computing environment including at least one service provider for providing a business process service and at least one service requester, wherein the business process service comprises component processes provided by component process providers, said method comprising:
i) receiving a request for a service from a service requester within said environment;
ii) processing said request to determine a requirement for said business process service; and
iii) providing a response to said service requester
characterised in that the method further comprises, prior to receiving the request:
iv) negotiating with one or more component process providers for the provision of one or more component processes;
v) storing in an updateable data store parameters indicative of the present capacity of the service provider to provide the service, based at least in part on the outcome of said negotiation; and the method further comprises:
vi) in response to receiving the request, accessing the updateable data store for said parameters indicative of the present capacity of the service provider to provide the service;
the response provided to said service requester being based on said parameters.

(The terms "service provider" and "service requester" mean here of course equipment for provisioning and accessing services respectively, rather than organisations and the like, as the terms are sometimes used elsewhere.)

Embodiments of the invention will now be described, by way of example only, with reference to the accompanying drawings, of which:
Figure 1 is a diagram which illustrates a suitable distributed architecture to support an embodiment of the present invention;
Figure 2 is a diagram which shows a basic building block of the architecture of Figure 1;
Figure 3 is a diagram which illustrates the relationships which exist between different parts of the building block of Figure 2;
Figure 4 is a diagram which illustrates the concept of a virtual agency;
Figure 5 is a diagram which represents the constituent parts of an agent according to an embodiment of the present invention;
Figure 6 is a diagram which illustrates an exemplary scenario in which an embodiment of the present invention can operate;
Figure 7 is a flow diagram of a process for operating a service in the scenario represented in Figure 6; and
Figure 8 shows an agent and the architecture in which it sits, in hardware terms.

Analysis of a number of business processes from various industrial and commercial domains, in making the present invention, resulted in several common characteristics being identified:
(i) multiple organisations are often involved in the business process. Each organisation attempts to maximise its own profit within the overall activity;
(ii) organisations are physically distributed. This distribution may be across one site, across a country, or even across continents. This situation is even more apparent for virtual organisations such as described in "Social Dimensions of Office Automation" by A Mowshowitz (1986), Advances in Computers, Vol 25, pp 335-404. These form allegiances for short periods of time and then disband when it is no longer profitable to stay together;
(iii) within organisations, there is a decentralised ownership of the tasks, information and resources involved in the business process;
(iv) different groups within organisations are relatively autonomous - they control how their resources are consumed, by whom, at what cost, and in what time frame. They also have their own information systems, with their own idiosyncratic representations, for managing their resources;
(v) there is a high degree of natural concurrency - many interrelated tasks are running at any given point of the business process. Although the control and resources of the constituent sub-parts are decentralised, there is often a need to place constraints on the entire process (e.g. total time, total budget, etc); and
(vi) business processes are highly dynamic and unpredictable - it is difficult to give a complete a priori specification of all the activities that need to be performed and how they should be ordered. Any detailed time plans which are produced are often disrupted by unavoidable delays or unanticipated events (e.g. people are ill or tasks take longer then expected).

Embodiments of the present invention are designed to support businesses in this type of environment.

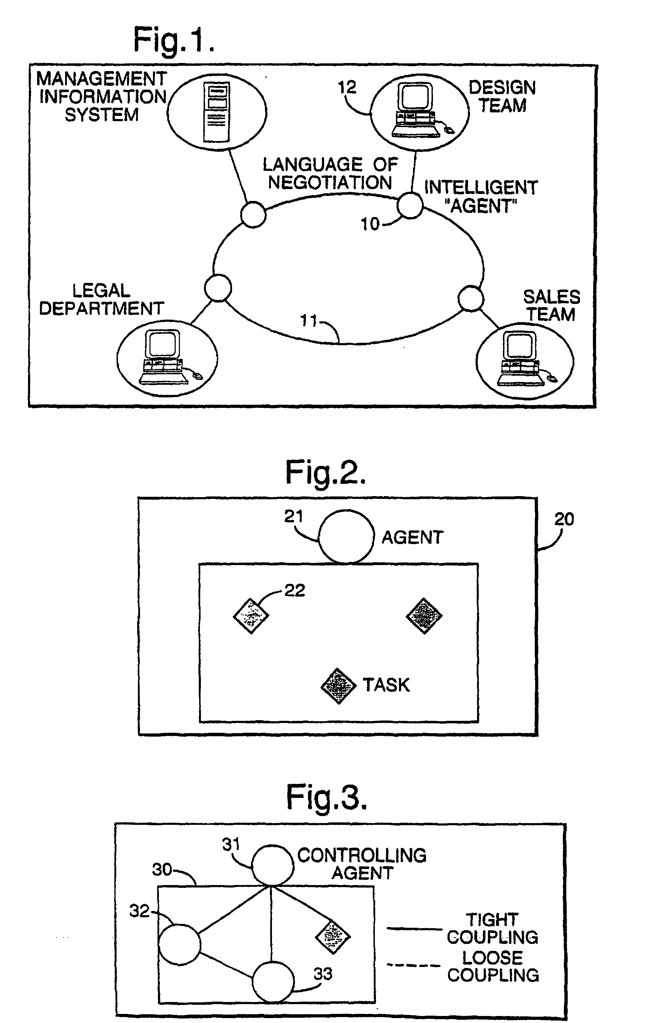

Figure 1 shows a top-level view of a suitable architecture within a business organisation in which an embodiment of the present invention can operate. In Figure 1, a distributed system of agents 10 are connected to one another via a suitable communications network 11. The environment, including the agents and the communications network, constitutes a distributed processing environment. Each department 12 in the organisation is represented by its own agent 10 in the environment which can provide a service related to the department to other agents.

A distributed computing environment should not be taken to be a specific piece of technology in this specification. It simply is intended to mean an environment in which computer processing capacity and resources may be located separately, being accessible via communications links of some sort.

In this description the term "agent" relates to a function or process which operates in the distributed computing environment and which can act autonomously to receive a request for an operation and provide a result. An agent normally has access to up-datable local data and usually also some global information about the distributed environment in which it sits. Agents operate autonomously, having decision-making functionality (intelligence) allowing them to negotiate and output a result in response to an incoming message.

Each agent is able to perform one or more services. A service corresponds to some unit of problem solving activity. The simplest service (called a task) represents an atomic unit of problem solving endeavour in embodiments of the present invention. These atomic units can be combined to form complex services by adding ordering constraints (e.g. two tasks can run in parallel, must run in parallel, or must run in sequence) and conditional control. The nesting of services can be arbitrarily complex and at the topmost level the entire business process can be viewed as a service.

Services are associated with one or more agents which are responsible for managing and executing them. Each service is managed by one agent, although it may involve execution of sub-services by a number of other agents. Since agents are autonomous there are no control dependencies between them; therefore, if an agent requires a service which is managed by another agent it cannot simply instruct it to start the service. Rather, the agents must come to a mutually acceptable agreement about the terms and conditions under which the desired service will be performed. Such contracts are called service level agreements - SLAs. The mechanism for making SLAs is negotiation - a joint decision making process in which the parties verbalise their (possibly contradictory) demands and then move towards agreement by a process of concession or search for new alternatives. This mechanism is described in "Negotiation Principles" by H J Mueller (1996) in Foundations of Distributed Artificial Intelligence, published by Wiley Interscience and edited by O'Hara and Jennings.

Referring to Figure 3, the agents 31,32,33 generally have the same basic architecture. This involves an *"agent head"* 31 which is responsible for managing the agent's activities and interacting with peers and an *"agency"* 30 which represents the agent's domain problem solving resources, including other agents 32,33 as resources. The head has a number of functional components responsible for each of its main activities - communication, service execution, situation assessment, and interaction management (see description below for more details). This internal architecture is related to the GRATE and ARCHON agent models described in "Controlling Co-operative Problem Solving in Industrial Multi-Agent Systems using Joint Intentions" by N.R. Jennings (1995), Artificial Intelligence 75 (2) 195-240; "GRATE: A General Framework for Co-operative Problem Solving" by N.R. Jennings, E.H. Mamdani, I. Laresgoiti, J. Perez and J Corera (1992), IEE-BCS Journal of Intelligent Systems Engineering, 1 (2) 102-114; and "Using ARCHON to develop real-word DAI applications for electricity transportation management and particle accelerator control" by N.R Jennings, J. Corera, I. Laresgoiti, E H Mamdani, F. Perriolat, P. Skarek and L.Z. Varga (1996), IEEE Expert.

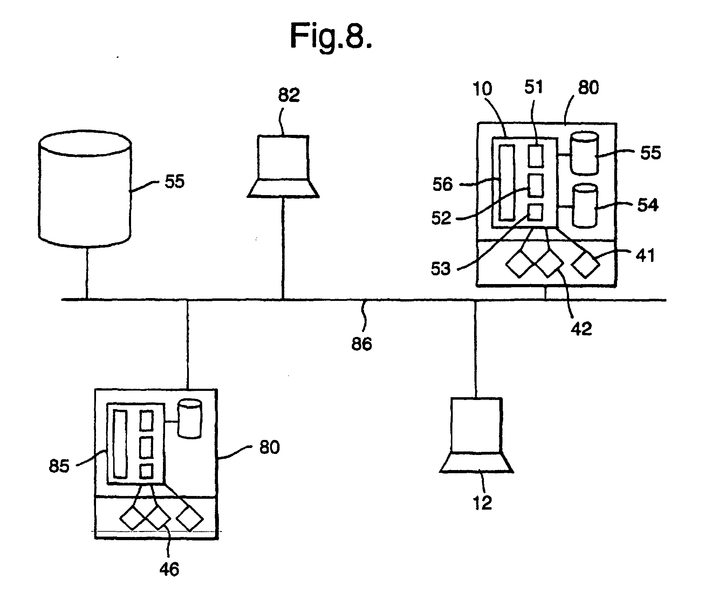

Referring to Figure 8, typically, an agent 10 is embodied as a piece of software, for example written in the C programming language, running on a suitable computing platform 80, for example a UNIX (Trademark) based platform. Requests and results are passed between an agent 10 and a requesting entity, which might be another agent 85 or a user terminal 12,82, across a suitable communications network 86, for example a TCP/IP-compatible local area network, to which the computing platform 80 is interfaced.

The agent 10 may be provided with a local data store(s) 84,85, or may have access to a database 82 via the network 86. This or these data store(s) may hold SLAs between agents and in support of services to be provided by the system.

Each agent 10 will generally comprise (in its "agent head") a set of processes 51,52,53 for use in managing the agents and their interactions, and will also be provided (for instance within its "agency") with task processing capability and/or resources 41,42,46 for use in actual provision of services requested.

In some embodiments, in accordance with the principles of distributed processing environments, plural agents 10 can reside on a common computing platform 80 and, conversely, a single agent 10 can be realised across plural computing platforms 80 in the environment. Also, the computing environment might be heterogeneous, and support various different types of computing platforms.

The agents 10 are able to communicate and negotiate with each other for the provision of services. Services provided by agents can range from the provision of information and data to the implementation of some concurrent task within a business process. A service usually comprises a number of primitive tasks. A task, being a primitive functional component of a business process, is a re-usable building block that allows an agent to manage processes which make-up an enterprise. Typically, a task 41 has a low-level structure which allows a user to define the basic operations that make up a business process and can be implemented as a managed object in the distributed computing environment. A task also has an implicit representation of resources it will consume when it is activated and an explicit representation of its operational requirements, including the information it requires and produces, and its duration of activation. Thus, the way a task behaves under normal circumstances, once activated, is predictable. In this embodiment, a task supports two interfaces: a management interface to support a standard set of operations which permit the exchange of management commands and information between tasks and agents; and an operational interface to support a non-standard, but agreed set of operations which allow the exchange of operational messages between tasks. In essence, an agent 10 on the infrastructure in Figure 1 is characterised by the services that it provides.

In this embodiment there are three main requirements of the architecture: autonomy, concurrency and migration. Autonomy means that a local organisation, for example a legal department, is able to define how it will perform its own local tasks and processes. The definition will determine how an agent representing the local organisation will interact with other agents. Tasks and services associated with agents should be able to run concurrently, with interactions between the tasks and services being monitored and managed by the agent. Migration allows services to be defined for agents incrementally, without the need to redesign the overall distributed system.

Figure 2 shows a representation of a basic building block 20 of the architecture. The basic building block comprises an agent 21 and tasks 22 which are under the control of the agent. In some embodiments, building blocks 20 may be arranged to operate on a peer-to-peer basis. That is, each unit 20 is able to negotiate with any other unit when supplying or requesting a service. Most commercial environments are founded on organisational models which are logically divided into a collection of related resources and services. Thus, in the present embodiment, the architecture draws upon this principle to group services and tasks where it makes pragmatic sense. For the present purposes, such a grouping of tasks and services is known collectively as an agency.

An agency is a collection of tasks (and by implication resources) and (sub-)agents that are under the direct control of an agent. An agency reflects the hierarchical grouping of tasks that are under some form of common ownership, and for which there is some reason to attempt to optimise the use of resources in the execution of those tasks. The collection of tasks and (sub-)agents in an agency does not necessarily reflect a functional grouping, though in most organisations this effect may be expected.

In Figure 3, other servant agents 32 and 33 can also belong within the agency of a controlling agent 31. This means that servant agents 31 and 32 provide services exclusively to the controlling agent 31. However, a servant agent still maintains its autonomy. A servant agent cannot offer its service directly in the world outside its agency. Under some conditions an agent can have both the role of a controlling agent and of a servant agent. Agents in an agency will normally be the controlling agents of lower level agencies. This leads to a hierarchical organisation of agencies reflecting the logical structure.

Generally, there are two types of agent interaction: negotiation and service management. In practice it is possible to have a spectrum of interactions between these extremes.

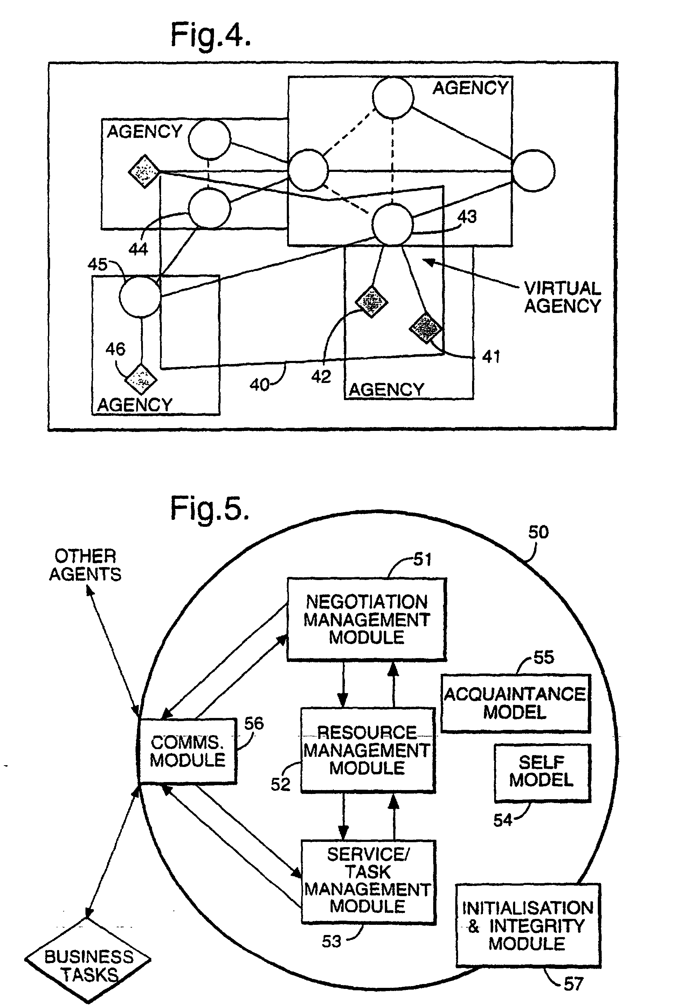

In the present embodiment, a number of separate services can be combined in providing a single service. The agent providing the service is designated the controlling agent, and then a set of (sub-)services from different agents can be selected and grouped to form a virtual agency, as illustrated in Figure 4.

A virtual agency is a structure which supports the service management function of an agent. As shown in Figure 4, a virtual agency 40 is the collection of tasks and sub-services 41 and 42 (from other agents 43 and 44) involved in the provision of some service by a controlling agent 45. In this case, the controlling agent 45 will have (or require) contracts for the (sub-)services that it requires from the other agents 43 and 44. The tasks 46 under its direct control that are involved in the provision of the service will be a sub-set of its agency. Each virtual agency is in a one-to-one mapping with a service that an agent provides. Before providing a service, the agent 45 can assemble pro-actively (at least some part of) its virtual agency by negotiating with other agents for its required (sub-)services. That is, it can negotiate and store SLAs in respect of a virtual agency in advance of receiving a service request.

An important advantage of supporting virtual agencies is that services can be provisioned automatically in real-time and resources can, in effect, be pooled from anywhere.

An agent can provide multiple services, each one demanding a virtual agency to be assembled and controlled. For this reason, it is necessary that the platforms supporting agents therefore can support multiple threads. Operating systems which support multiple threads are OS2, UNIX, Windows 95 (Trademark) or Windows NT (Trademark). In practice, distributed computing platforms have been developed specifically for supporting multi-threaded applications. One such platform is DAIS from ICL, which is conformant with the Object Management Group's (OMG) Common Object Request Broker Architecture (CORBA). CORBA-compliant products offer the Interface Definition Language (IDL) as a homogeneous object interface. An advantage of adhering to the CORBA standard is that all CORBA version 2 compliant platforms will be able to inter-work with each other extending the potential scope of applications using them.

In accordance with the present embodiment, an agent has three functional external interfaces:
- an agent negotiation interface having a standard set of primitives to support the negotiation of terms between agents requesting a service (client agents) and agents supplying services (server agents);
- a service management interface having a standard set of operations which permit the exchange of information between client agents and server agents; and
- a task management interface having a standard set of operations which permit the exchange of management commands and information between agents and tasks.

In practice, all three functional interfaces are realised as a single physical interface, for example an interface in a computer system, in connection with a communications network 86.

Figure 5 shows the high-level, functional modules of an agent according to the present embodiment. The modules can reside on one computing platform or on several. Each module is typically a software process, where all the modules together define the character of the agent. Communications between modules is effected either by parameter passing in procedure calls, by each module having access to common data files containing relevant, up-datable data, or by inter-object messaging.

The agent 50 includes a negotiation management module (NMM) 51. The NMM 51 is invoked when it is necessary that a contract should be established with some external agent for providing a particular service. An agent can commit to a contract without performing detailed resource allocation. That is to say, the NMM 51 of an agent can commit that agent (a server) to provide a service without detailed scheduling by the agent's resource management module (RMM), which is described in more detail below. In this way, an agent de-couples negotiation from detailed resource scheduling, in order to support real-time performance during the negotiation process. In the present embodiment, an agent can negotiate for multiple contracts simultaneously. The NMM 51 of an agent is necessarily multi-threaded for this purpose.

During negotiation, the NMM 51 correlates and balances multiple criteria both within negotiation for a single service and across all the negotiations in which the agent in involved. The criteria can be modelled as (partial) ordinal value spaces that represent parameters such as quality, time, cost, etc.

A negotiation language, an example of which is illustrated in more detail below, is supported by the NMM 51 to support agent negotiations. The language comprises agreed primitives and a protocol to allow agents to suggest modifications to, and consent to, the value of parameters in a contract. The negotiation language protocol defines the valid ordering on sending and receipt of primitives during negotiation between agents. Negotiation for the contract involves the selection of messages referring to former messages, stored in a data storage area, conforming to a protocol and processing incoming messages with regard to the protocol.

A contract, within the meaning of this description, is the result of a negotiated agreement between agents. The contract contains the terms and conditions for the delivery of an instance of a service. The contract contains a list of agreed values for parameters which establish the criteria for the delivery of the service. For example, the time(s) at which the service will be available and/or activated, the duration of the activation, the quality, the cost, penalty for failure, etc. These parameters are contained in a contract template, defined for each service on offer, which is used by an agent to structure its negotiations.

A RMM 52 serves as a link and balancer between an agent's two primary roles - that of being an individual and that of being part of a community. The RMM 52 manages resources controlled by the agent. The major concern of the RMM 52 is scheduling. This is essentially the maintenance of negotiated contracts. This involves the co-ordination and scheduling of services and tasks to ensure that existing contractual obligations are met. The RMM 52 checks regularly the conditions regarding an internal time line and changes of information. The RMM 52 also triggers negotiation by the NMM 51 when a contract is required.

A service/task management module (SMM) 53 is responsible for launching and controlling services and tasks. The SMM 53 deals with contracts which have been established, ensuring that terms and conditions are honoured, that appropriate levels of reporting take place and that the contract is finished cleanly. The SMM 53 also maintains the status of active services. This involves the maintenance of stacks, to perform the successive decomposition of services, and pointers to the active sub-services and tasks. Moreover, the SMM 53 is responsible for the provision of required information in order to launch a service including the checking of conditions and returning produced results. The SMM 53 furthermore performs tasks and task error tracking.

An agent can execute multiple services and tasks simultaneously. The SMM 53 of an agent needs to be multi-threaded for this purpose. During operation, the SMM 53 is also responsible for handling exceptions from the tasks within its agency and from other agents (as servers). Exceptions can be resolved, in accordance with the present embodiment, in one of several ways: re-resourcing the task/service by the RMM 51; re-negotiating the terms of the contract (as the defaulting server agent); re-locating the service with another agent (as the aggrieved client agent); or ignoring the exception and accepting a penalty (if appropriate). This flexible approach to resolving exceptions is also applied to instances where a contract has been entered into, without detailed resource scheduling, but cannot be completed due to an unforeseen demand for a particular resource or agent (as a server).

Each agent 50 has an information store, for example in main memory or on an external data storage device, which provides both persistent and temporary (working) memory. The store can be partitioned into the self and acquaintance models.

The self model (SM) 54 comprises information on the services provided by the agent 50. The SM 54 maintains the representation of services and information under the regime of an agent and stores the contracts (SLAs) to which an agent (as a supplier of a service) is committed.

The acquaintance model (AM) 55 enables the agent 50 to build up a picture of information as to the services offered by other agents and a history of the performance of those agents. Such historic information can determine which solution to a problem an agent adopts, in the event there is a choice. The AM 55 stores also the contracts (SLAs) that an agent (as a recipient of a service) made with other agents.

The nature and scope of the SLAs can be derived almost exactly from the types of legal contract which are often used to regulate current business transactions. An example of an SLA is as follows:

| Slot Name | Instantiated Values |
|---|---|
| SERVICE_NAME: | cost_&_design_customer_network |
| SLA_ID: | a1001 |
| SERVER_AGENT: | DD |
| CLIENT_AGENT: | CSD |
| SLA_DELIVERY_TYPE: | on_demand |
| DURATION: (minutes) | 320 |
| START-TIME: | 9:00 |
| END-TIME: | 18:00 |
| VOLUME: | 35 |
| PRICE: (per costing): | 35 |
| PENALTY: | 30 |
| CLIENT_INFO: | cr_profile |
| REPORTING POLICY: | customer_quote |

Service_name is the service to which the agreement refers and sla_id is the SLA's unique identifier (covering the case where there are multiple agreements for the same service). Server_agent and client_agent represent the agents who are party to the agreement. Delivery_type identifies the way in which the service is to be provisioned. The SLA's scheduling information is used for service execution and management - duration represents the maximum time the server can take to finish the service, and start_time and end_time represent the time during which the agreement is valid. In this case, the agreement specifies that agent CSD can invoke agent DD to cost and design a customer network whenever it is required between 09:00 and 18:00 and each service execution should take no more than 320 minutes. The agreement also contains meta-service information such as the volume of invocations permissible between the start and end times, the price paid per invocation, and the penalty the server incurs for every violation. Client_info specifies the information the client must provide to the server at service invocation (in this case CSD must provide the customer profile) and reporting_policy specifies the information the server returns upon completion.

There are two support modules which support the creation and communication of the agent 50. A communication module (CM) 56 is the focal point for both in-coming and out-going messages. The CM 56 supports the distribution of software agents across the distributed computing environment.

An initialisation module (IM) 57 is the module that is started first. This module initialises all the other agent modules. Once all the modules are in place, the IM 57 is mostly inactive. It exports an object identifier to the distributed computing environment so that it can be located by other agents. The IM 57 is also the initial point of connection between the agent and a range of agent management, inspection and debugging tools.

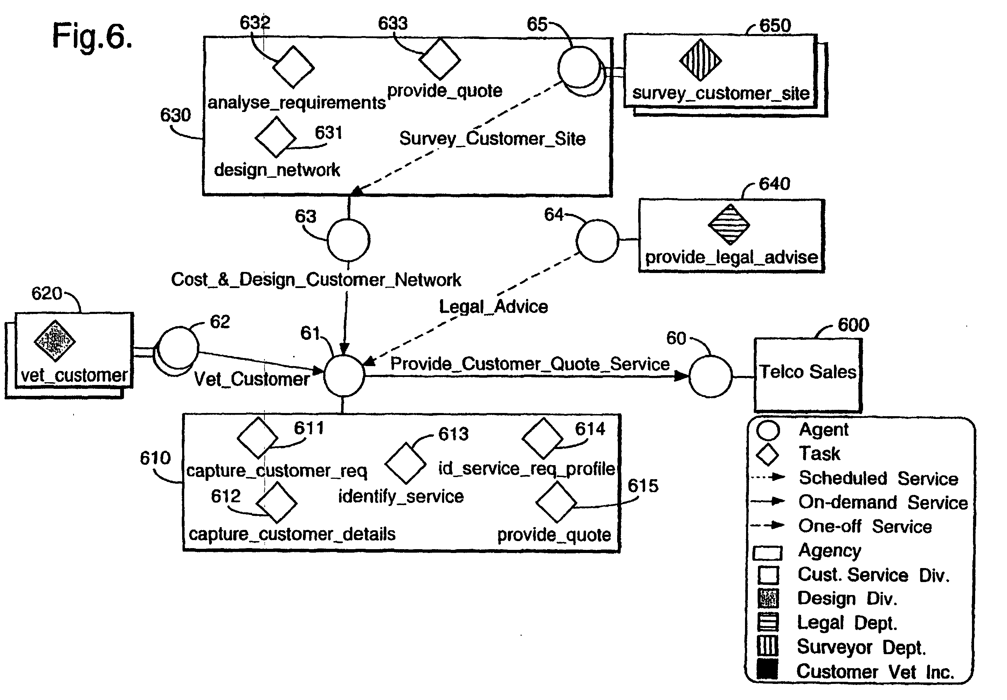

Figure 6 illustrates an example of a virtual agency according to the present embodiment. There are six parties in the agency, each having a respective agent: a sales department 600 and its associated agent 60; a customer service division 610 and its associated agent 61; a legal department 640 and it associated agent 64; a design division 630 and it associated agent 63; a surveyor department 650 and its associated agent 65; and a customer vetting department 620 and its associated agent 62.

The customer service division 610 is able to provide, via its agent 61, a "provide customer quote" service. This service has three component services: a "legal advice" service; a "vet customer" service; and a "cost and design customers network" service, plus five component tasks: "capture customer details" 612; "capture customer requirements" 611; "identify service requirements profile" 614; "identify service" 613; and "provide quote" 615.

The legal advice service is offered as a "regular" service (the types of service offered are explained in more detail below) by the legal advice agent 64, whereby on a regular basis the legal department will review the customer requests for bespoke services and flag those that are not legal or which pose legal problems.

The vet customer service, provided by the vet customer agent 62, is an "on-demand" service consisting of a single task 621 which vets customers by verifying identity and checking credit worthiness. Typically, the vet customer service would be provided by an out-sourced credit checking agency.

The cost and design customer network service, provided by the cost and design customer network agent 63, costs the bespoke service requested by the customer. This service comprises three tasks and one component service. The tasks are: "analyse requirements" 632; "design network" 631; and "provide quote" 633. These tasks, based on their knowledge of the customer's premises equipment (CPE), provide a quote for the required network. In certain circumstances, the survey customer site service might be utilised to survey the customer's site.

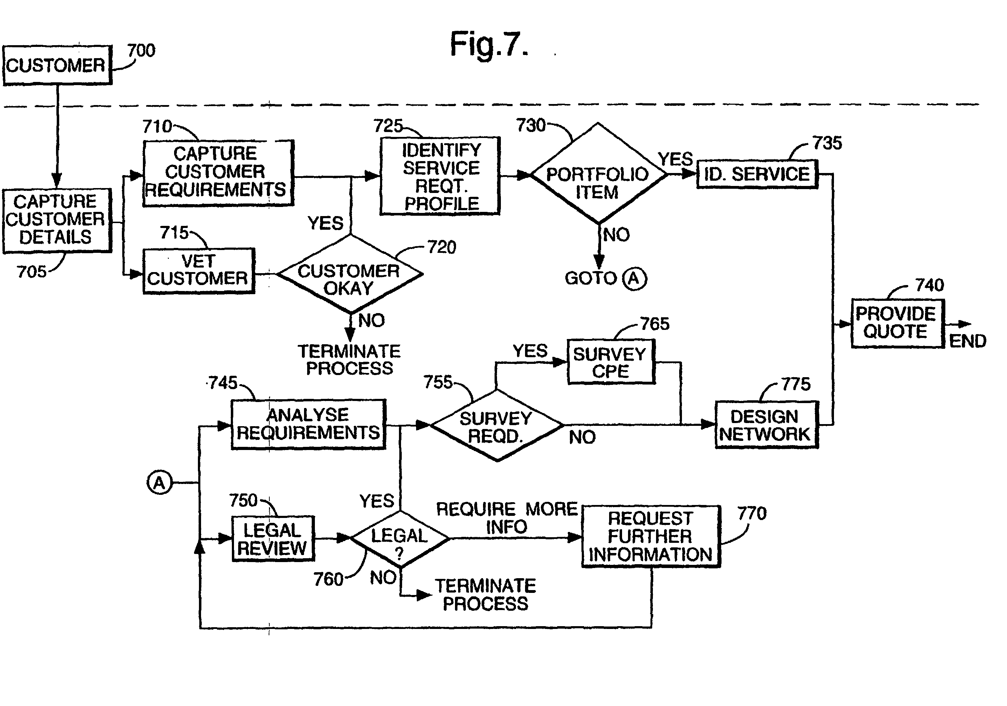

The survey customer site service, provided by the survey customer site agent 65, is a "one-off" service which has to be specifically negotiated for when needed. This service is only required when there are insufficient details on a customer's site for design to commence. The process for providing a quote is exemplified in Figure 7.

The provide customer quote service is typically offered to a telecommunications sales department 600 to support its customer servicing. On receipt of a customer service quote request, the customer service agent 61 will generate a quote for the required service and send it to the customer.

The process is initiated with a customer contacting the customer service division in step 700. The customer details are captured, in step 705, and whilst the customer is being vetted in step 715 the customer's requirements are captured in step 710. If the customer's vetting fails, then the process is terminated by step 720.

The customer's requirements are recorded and mapped against the service portfolio in step 725. If the requirements can be met by a standard off-the-shelf portfolio item then an immediate quote can be offered in steps 730, 735 and 740, after which the service ends. In cases of bespoke service requests, the process is more complex and involves a bid manager.

For bespoke items the bid manager(not shown) further analyses the customer's requirements in step 745, and the legality of the requirements are checked in step 750. In circumstances where a request is possibly illegal the quote process will be suspended pending more information from the customer at step 770. Where a request is definitely illegal, determined by step 760, the process is terminated and the customer informed. For the present purposes, it will be assumed that the bid manager is a human operator, but it is envisaged that a number of the tasks can be automated.

In order to prepare a network design and a quotation it is necessary to have a detailed plan of existing equipment at the customer's premises. In certain cases plans of the CPE might not exist or be out of date. In such cases the bid manager will determine whether the customer site should be surveyed in step 755. This would typically only be done where the bid value exceeds a certain level (ie the most profitable bids). If required a survey is requested in step 765. Once the required information on customer CPE is available the network is designed in step 775. On completion of the network design and associated costing, the customer will be informed of the service quote in step 740 and the process terminated.

Each activity in this process requires resourcing and has a start and an end point whereby progress can be measured. The choice points in the process indicate which activities require provisioning to operate sequentially. Similarly, there are a number of activities which must/may operate concurrently and which require co-ordinating.

The key role of an agent is to provide a service. A service can be requested (or negotiated for) by another agent, and typically this may result in the transfer of information between the agents. Agents must contain the definitions of how to provide each of the services which it offers. Accordingly, a description for each service is represented in the agent. A service description is made up of two types of primitives:
1. tasks - executed entirely within the control of the agent;
2. services - provided by other agents over the infrastructure.

Tasks and services may be initiated concurrently, and the interaction and communication between them is managed automatically by constraints in the service description. It should be noted that services in turn may be defined recursively in terms of services from other agents, but eventually the definitions will be solely in terms of task.

A service is a packaging of tasks and other (sub-)services that allows an agent to offer (as server) from its agency, or to receive (as client) from another agent, some functional operation. The service can be re-used as a component of another service. In the present embodiment, a service is a recursive control structure composed of tasks, other (sub-)services and performance parameters. The performance parameters are agreed during a negotiation process between two agents (referred to as client and server respectively). These parameters determine the precise characteristics of an instance of a service upon activation.

In some situations, an agent may need to guarantee the existence and availability of a particular service with some fundamental level of assurance and reliability. This would be defined by the performance parameters. There are three basic levels of service: one-off, which allows a single activation of the service (the time of activation is agreed during negotiation); regular, which allows multiple activations of the service at agreed and pre-scheduled times; and on-demand, which allows activation of the service at and time within an agreed time window.

A service description is created and registered with an agent by a language which supports the formulation of complex concurrent operations. A description comprises a list of statements defining the steps which together define the service. Within the language, each statement expresses both the sub-set of a virtual agency which is to be used and the condition(s) under which control may pass to the next statement. The language also contains primitives to express that tasks or (sub-)services may be executed concurrently, or that they must be run concurrently. In some cases, however, sequential operation is also provided for.

Preferably, the service description language is an interpreted language, and services may therefore be re-defined by a service creator and registered with an agent without extensive re-compilation. For this reason, each of the core modules in an agent includes an interpreter to support the main function of the module (service negotiation, resource management and service/task execution respectively). The language generally combines aspects of declarative non-determinism, which allows an agent to determine dynamically which elements of the virtual agency to employ, and direct procedural control, which allows the service creator to structure and order the language statements.

In use, an agent uses a service description to determine, firstly, how best to negotiate for sub-services in its virtual agency and, secondly, how to manage the execution of those sub-services together with its own tasks (if it has any), A service can be defined, for example, by the following features:
1. Each service has a unique name.
2. Each service has a guard. A guard declares information which is required in order to launch the service. There may also be constraints expressed such as that a service may be launched only when some value x is available and is greater than 5, etc.
3. Each service may have assumptions. An assumption may impose further constraints on information or assign default values (which are then believed but perhaps not yet known).
4. Each service has a body which describes how the service can be executed.

By way of example, the part of an agent's self-model which contains the service descriptions may be instantiated in the following manner:
(Service
:Name PriceForecast
:Guard (Region, ProductionCapacity, CapacityCompetition, Demand, Experience)
:Assumption (SalesLevel :Default 100 :Obtain)
:Body (Sequence
(Parallel
(Sequence CreateTable, SetYears (94..96))
(Calculate (Region, ProductionCapacity, CapacityCompetition, Demand, Experience))
StorelnTable))

This routine states that a price forecast is produced based on information about a region, the production capacity of the company and the capacity of the competition, the demand specified by a client and the experience of a company which is fixed in the services guard. In general, this information will not be available automatically and has to be provided on demand. This will be done by looking up an agent's self and acquaintance models. Most of the information which is not given beforehand might be obtained via launching appropriate services as indicated by a "provided-by" slot. After checking this initial condition (guard), in order to execute the appropriate calculations, the agent will assume that the sales level (in relation to the specified demand) will be 100%. Albeit in order to justify its calculation, the agent will have to launch a service to obtain the definite value of the sales level. When this has been checked, the agent will initiate the service execution, ie it will launch the body.

It should be noted that none of the services in the body needs to be executed by the agent itself. It is likely that the parallel part of the body will be provided by different agents. In general, each of the services in the body will be represented somewhere in the agent's self or acquaintance models. In fact, what the body describes is that a price forecast is provided as a short sequence of services. The first service is a parallel service which is followed by the service "StorelnTable". The parallel service describes the creation of a table in which the years 94 to 96 are initialised. At the same time (in parallel), an agent performs some calculation. When this has been provided successfully, then the results may be stored in the table.

There is a need to define a language that enables the agent to communicate and negotiate. Furthermore, when two or more agents are communicating they must share a common view of the problem domain. The fallowing description provides an example of such a language for negotiation between two peer-level agents each representing their own respective agencies. It will be appreciated, however, that other forms of language would be equally as suitable for this purpose. The generic service/information negotiation structure is as follows.
1. Find/locate (a service or piece of information) - make contact.
2. Ask/explain (what is the form or nature of the service or information) - get the details.
3. Establish/negotiate (setting a service or receiving some information) - agree what is to be done.
4. Execute/review/inform (perform the service or deliver the information, with the ability to review progress and inform when necessary) - do what you agreed.
5. Terminate.

It is important that this structure applies to both explicit service requests as well as the more general, implicit service requirement of finding, locating and managing information within a business. The structure employs the following primitives, numbered in accordance with the above structure.
1. CAN (YOU/ANYONE) DO <a service s>
   CAN (YOU/ANYONE) PROVIDE <information i>
   --> > return list of servicelinformation providers
   The primitives would be equally applicable in a multi-cast situation involving department or enterprise based agents and location brokers, as well as a contract net type of broadcast request for the service. Various degrees of sophistication could be imagined in terms of the details associated with the location of the service provider dependant upon the type of models that are developed for agents themselves. These primitives can be summarised as saying "WHO" can do this and "WHERE" they are.
2. SERVICE DETAILS <ask agent a, regarding service s>
   INFORMATION DETAILS <ask agent a, regarding information i>
   --> >return list of < inputs required>, <outputs given>,
   <Optional Resource ("time"/"cost"/"..." estimate>
   These primitives let you establish exactly what the service consists of in more detail. It can be summarised as saying "WHAT" can be done. As no global common language is assumed, an essential additional primitive here will be "EXPLAIN <ontology/term>" which will be needed to allow agents to handle new terms.
3. PROPOSE <agent a, service s, conditions c, optional rationale r>
   COUNTER PROPOSE <agent a, service s, conditions c, optional rationale r>
   REJECT
   ACCEPT
   --> > return <agreement (working conventions, reporting level, penalties, etc)>
   These are the basic primitives that allow agents to agree how a service is to be provided. The conditions will be split into "mandatory" and "desirable". The optional rationale and details of service provision should provide agents with the mechanism to break deadlocks arising from "unnecessary" mandatory requirements, or provide novel/alternative forms of service provision. This should allow much more sophisticated forms of negotiation processes to be developed/researched. The key thing to note here is that excepting a proposal, after any modifications (and perhaps nested asking/explanation), results in a specific contract that can then be scheduled to be carried out.
4. INVOKE <agent a, service s, agreement c>
   INFORM (ie notify) <agent a, mode of acknowledgement m>
   QUERY/INSPECT < service s>
   REVIEW <services delivered d >
   Services are invoked with respect to some prior agreement, after which the progress can be queried or formally reviewed according to the reporting levels in the contract. If it is necessary for the agents to inform each other of events (unforeseen or otherwise) then this can be done with the mode of acknowledgement set to "none" or "need acknowledgement" or "re-negotiate". This is a critical primitive that will allow the whole negotiation process to be become nested if necessary.
5. TERMINATE <status s, option reason r>
   When a service terminates it will either have satisfied its "success" or "delivery" criteria set out in the contractor not. If not, an optional reason should be given for termination.

The above description illustrates an embodiment of the present invention suitable for managing business process enactment. The embodiment demonstrates how multiple agents in a distributed computing environment can co-operate to manage both the collection of pertinent information and the tasks and resources which use the information. Such a system potentially speeds up processes within an organisation to provide a better overall service to its internal and external customers as well as the provision of whatever services are available, by running the tasks and resources, particularly by the use of prenegotiated SLAs in virtual agencies.

The system provides flexibility in that it is capable of negotiating with a requesting entity over provision of a service, and/or with resources available to it in provision of a service, so as to be able to determine a modified version of a service which is acceptable to the entity, or to find a modified relationship with said resources so as to provide the service.

In addition, it is possible for the system to act proactively in information and service provision to the user, for instance in relation to changes affecting potentially requested services by that user.

## Claims

1. A service provision system for use in distributed processing environments, said system comprising:
an input for receiving a service request;
service request processing means for identifying one or more component processes for use in provisioning the requested service;
negotiation means for negotiating with an entity or entities for providing each component process to establish conditions applicable to provision of the component process(es);
means to access an up-datable data store for storing conditions when established; and
an output for providing a response to the service request, said response comprising an indication of availability of the requested service;
the service request processing means being adapted to process a service request by accessing one or more of the conditions in the data store, processing the request using the one or more conditions, and producing said response,
**characterised in that** said negotiation means is adapted to assemble said conditions in the data store proactively by negotiation prior to receipt of said service request.

2. A system according to Claim 1 wherein one or more of said conditions has an associated expiry time for storage in the data store.

3. A system according to claim 2 wherein the processing means is adapted to detect an expired or absent condition in the data store, which condition is applicable to a component process for the provision of a requested service, and to trigger the negotiation means to establish a substitute condition.

4. A system according to any one of the preceding claims which further comprises initiation means connected by said distributed processing environment to an entity or entities for providing each component process to initiate one or more of said component processes in provision of a requested service.

5. A service provision system according to any one of the preceding claims, said system further comprising means for scheduling one or more component processes to provide a service.

6. A service provision system according to either one of claims 4 or 5 which further comprises means for monitoring performance in service provision and for amending conditions stored in said data store in accordance with monitored performance.

7. A service provision system according to claim 6 which further comprises means for storing received service requests and for reprocessing a stored service request in the event that one or more associated stored conditions is amended.

8. A distributed computing environment comprising a plurality of service provision systems according to any one of the preceding claims, wherein each of said systems, together with at least one entity or entities for providing a component process, is identified with one of a plurality of organisations, said plurality of organisations together defining a virtual organisation for the provision of a group of services.

9. A distributed computing environment according to claim 8, wherein said identification, and thus the virtual organisation, exist for a pre-determined period.

10. A method of business process enactment, said method being implemented in a distributed computing environment including at least one service provider for providing a business process service and at least one service requester, wherein the business process service comprises component processes provided by component process providers, said method comprising:
i) receiving a request for a service from a service requester within said environment;
ii) processing said request to determine a requirement for said business process service; and
iii) providing a response to said service requester
**characterised in that** the method further comprises, prior to receiving the request:
iv) negotiating with one or more component process providers for the provision of one or more component processes;
v) storing in an updatable data store parameters indicative of the present capacity of the service provider to provide the service, based at least in part on the outcome of said negotiation;
and the method further comprises:
vi) in response to receiving the request, accessing the up-datable data store for said parameters indicative of the present capacity of the service provider to provide the service;
the response provided to said service requester being based on said parameters.

11. A method according to claim 10 wherein said parameters are stored in the data store in accordance with a time-out mechanism.

12. A method according to claim 11 wherein the requested service comprises a proactive information service.

13. A method according to any one of claims 10, 11 or 12 wherein said response is selected from indications that:
a) sufficient capacity is available to provide the service;
b) insufficient capacity is available to provide the service; and
c) sufficient capacity is available to provide the service if modified, together with associated modifications.

14. A method according to any one of claims 10 to 13 which further comprises the step of scheduling provision of the requested service.

15. A method according to claim 14 which further comprises, on failure of said scheduling step, a step selected from:
a) rescheduling one or more component processes;
b) transmitting a message to said service requester that the originally requested service can only be provided under different parameters;
c) relocating one or more component processes with a different component process provider; or
d) indicating to said service requester that the requested service cannot be provided.

16. A method according to any one of claims 10 to 15 wherein, in the event a service provider and a service requester agree a contract to provide and accept a service respectively, a copy of the contract is stored as a data structure representing the terms and conditions of the contract by both the service provider and the service requester.

## Patentansprüche

1. System zur Bereitstellung von Diensten in Umgebungen für verteilte Verarbeitung, wobei das System folgendes umfasst:
einen Eingang zum Empfangen einer Anfrage eines Dienstes;
eine Einrichtung zur Verarbeitung der Anfrage eines Dienstes für die Identifikation eines oder mehrerer Teilprozesse für die Bereitstellung des angefragten Dienstes;
eine Verhandlungseinrichtung zum Verhandeln mit einer Einheit oder Einheiten zur Bereitstellung jedes Teilprozesses, um Bedingungen herzustellen, die für die Bereitstellung des/der Teilprozesse(s) geeignet sind;
eine Einrichtung, um auf einen aktualisierbaren Datenspeicher zuzugreifen, der die Bedingungen speichert, wenn sie hergestellt sind,
und
einen Ausgang zur Lieferung einer Antwort auf die Anfrage des Dienstes, wobei die Antwort einen Hinweis auf die Verfügbarkeit des angefragten Dienstes enthält; wobei
die Einrichtung zur Verarbeitung der Anfrage eines Dienstes dazu eingerichtet ist, eine Anfrage eines Dienstes zu verarbeiten, indem auf eine oder mehrere der Bedingungen in dem Datenspeicher zugegriffen, die Anfrage unter Verwendung der einen oder der mehreren Bedingungen verarbeitet und die Antwort erzeugt wird,
**dadurch gekennzeichnet,**
**dass** die Verhandlungseinrichtung dazu eingerichtet ist, die Bedingungen in den Datenspeicher durch Verhandlung vor dem Empfangen der Anfrage des Dienstes proaktiv zusammenzustellen.

2. System nach Anspruch 1, in dem einer oder mehreren der Bedingungen einen zugehörigen Zeitpunkt des Ablaufs ihrer Speicherung in dem
Datenspeicher aufweist.

3. System nach Anspruch 2, in dem die Verarbeitungseinrichtung dazu eingerichtet ist, eine abgelaufene oder fehlende Bedingung in dem Datenspeicher zu detektieren, zu erkennen, welche Bedingung für einen Teilprozess zur Bereitstellung eines angefragten Dienstes zutreffend ist, und die Verhandlungseinrichtung für die Herstellung einer Ersatzbedingung aufzurufen.

4. System nach einem der vorangehenden Ansprüche, das weiter eine Einleitungseinrichtung umfasst, die über die Umgebung für verteilte Verarbeitung mit einer Einheit oder Einheiten zur Bereitstellung jedes Teilprozesses verbunden ist, um einen oder mehrere der Teilprozesse für die Bereitstellung eines angefragten Dienstes einzuleiten.

5. System zur Bereitstellung von Diensten nach einem der vorangehenden Ansprüche, wobei das System weiter eine Einrichtung zur Planung eines oder mehrerer Teilprozesse für die Bereitstellung eines Dienstes umfasst.

6. System zur Bereitstellung von Diensten nach Anspruch 4 oder 5, das weiter eine Einrichtung zur Überwachung der Leistung bei der Bereitstellung von Diensten und zur Änderung der Bedingungen, die in dem Datenspeicher gespeichert sind, entsprechend der überwachten Leistung umfasst.

7. System zur Bereitstellung von Diensten nach Anspruch 6, das weiter eine Einrichtung zum Speichern empfangener Anfragen von Diensten und, für den Fall, dass eine oder mehrere zugeordnete gespeicherte Bedingungen geändert werden, zur erneuten Verarbeitung einer gespeicherten Anfrage von Diensten umfasst.

8. Verteilte Rechnerumgebung mit einer Vielzahl von Systemen zur Bereitstellung von Diensten nach einem der vorangehenden Ansprüche, in der jedes der Systeme zusammen mit wenigstens einer Einheit oder Einheiten zur Bereitstellung eines Teilprozesses einer aus einer Vielzahl von Organisationen zugeordnet wird, wobei die Vielzahl von Organisationen zusammen eine virtuelle Organisation zur Bereitstellung einer Gruppe von Diensten definiert.

9. Verteilte Rechnerumgebung nach Anspruch 8, in der die Zuordnung, und folglich die virtuelle Organisation, für eine vorher festgelegte Zeitdauer existiert.

10. Verfahren zur Erstellung von Geschäftsprozessen, das in einer verteilten Rechnerumgebung implementiert ist, die wenigstens einen Dienstanbieter zur Bereitstellung von Geschäftsprozessdiensten und wenigstens einen Nachfrager von Diensten einschließt, bei dem der Geschäftsprozessdienst Teilprozesse umfasst, die von Anbietern von Teilprozessen bereitgestellt werden, wobei das Verfahren folgendes umfasst:
i) Empfangen einer Anfrage eines Dienstes von einem Nachfrager von Diensten in der Umgebung;
ii) Verarbeitung der Anfrage, um eine Anforderung für den Geschäftsprozessdienst festzulegen;
iii) Liefern einer Antwort an den Nachfrager des Dienstes;
**dadurch gekennzeichnet,**
**dass** das Verfahren vor dem Empfang der Anfrage weiter folgendes umfasst:
iv) Verhandlung mit einem oder mehreren Anbietern von Teilprozessen über die Bereitstellung von einem oder mehreren Teilprozessen;
v) Speichern von Parametern in einem aktualisierbaren Speicher, die die vorhandene Kapazität des Dienstanbieters für die Bereitstellung des Dienstes anzeigen und die wenigstens teilweise auf dem Ergebnis der Verhandlung beruhen;
und **dass** das Verfahren weiter folgendes umfasst:
vi) Zugriff auf die Parameter in dem aktualisierbaren Datenspeicher als Antwort auf den Empfang der Anfrage, die die vorhandene Kapazität des Dienstanbieters anzeigen, der den Dienst bereitstellen soll;
wobei die Antwort, die an den Anfrager des Dienstes geliefert wird, auf den Parametern basiert.

11. Verfahren nach Anspruch 10, bei dem die Parameter in dem Datenspeicher mit einem Zeitablaufmechanismus gespeichert sind.

12. Verfahren nach Anspruch 1, bei dem der angefragte Dienst einen proaktiven Informationsdienst umfasst.

13. Verfahren nach einem der Ansprüche 10, 11 oder 12, bei dem die Antwort aus Hinweisen darauf ausgewählt wird, dass
a) ausreichende Kapazität für die Bereitstellung des Dienstes verfügbar ist;
b) keine ausreichende Kapazität zur Bereitstellung des Dienstes verfügbar ist; und
c) ausreichende Kapazität für die Bereitstellung des Dienstes verfügbar ist, wenn der dieser zusammen mit zugeordneten Modifikationen modifiziert wird.

14. Verfahren nach einem der Ansprüche 10 bis 13, das weiter den Schritt der Planung der Bereitstellung des angefragten Dienstes umfasst.

15. Verfahren nach Anspruch 14, das bei Versagen des Planungsschrittes weiter einen der folgenden Schritte umfasst:
a) erneute Planung von einem oder mehreren Teilprozessen;
b) Übertragung einer Nachricht zu dem Anfrager des Dienstes, dass der ursprünglich angefragte Dienstes nur mit abweichenden Parametern bereitgestellt werden kann;
c) Umdisponieren von einem oder mehreren Teilprozessen auf einen anderen Anbieter von Teilprozessen; oder
d) dem Anfrager des Dienstes anzeigen, dass der Dienst nicht bereitgestellt werden kann.

16. Verfahren nach einem Ansprüche 10 bis 15, bei dem in dem Fall, dass ein Dienstanbieter und ein Nachfrager von Diensten einen Vertrag darüber abschließen, einen Dienst bereitzustellen beziehungsweise anzunehmen, eine Kopie des Vertrages als Datenstruktur, die die Bedingungen und Abmachungen des Vertrages darstellen, sowohl von dem Dienstanbieter als auch dem Anfrager des Dienstes gespeichert wird.

## Revendications

1. Système de fourniture de service destiné à être utilisé dans des environnements de traitement réparti, ledit système comprenant :
une entrée destinée à recevoir une demande de service,
un moyen de traitement de demande de service destiné à identifier un ou plusieurs traitements constitutifs à utiliser pour fournir le service demandé,
un moyen de négociation destiné à négocier avec une entité ou des entités pour fournir chaque traitement constitutif afin d'établir des conditions applicables à la fourniture du ou des traitements constitutifs,
un moyen destiné à accéder à une mémoire de données pouvant être mise à jour pour mémoriser des conditions lorsqu'elles sont établies, et
une sortie destinée à fournir une réponse à la demande de service, ladite réponse comprenant une indication de la disponibilité du service demandé,
le moyen de traitement de demande de service étant conçu pour traiter une demande de service en accédant à une ou plusieurs des conditions dans la mémoire de données, en traitant la demande en utilisant les une ou plusieurs conditions, et en produisant ladite réponse,
**caractérisé en ce que** ledit moyen de négociation est conçu pour assembler lesdites conditions dans la mémoire de données dynamiquement grâce à une négociation avant une réception de ladite demande de service.

2. Système selon la revendication 1, dans lequel une ou plusieurs desdites conditions comportent un temps d'expiration associé pour la mémoire dans la mémoire de données.

3. Système selon la revendication 2, dans lequel le moyen de traitement est conçu pour détecter une condition d'expiration ou d'absence dans la mémoire de données, laquelle condition est applicable à un traitement constitutif pour la fourniture d'un service demandé, et pour déclencher le moyen de négociation afin d'établir une condition de remplacement.

4. Système selon l'une quelconque des revendications précédentes, qui comprend en outre un moyen de lancement relié par ledit environnement de traitement réparti à une entité ou des entités afin de fournir chaque traitement constitutif pour lancer un ou plusieurs desdits traitements constitutifs dans la fourniture d'un service demandé.

5. Système de fourniture de service selon l'une quelconque des revendications précédentes, ledit système comprenant en outre un moyen destiné à planifier un ou plusieurs traitements constitutifs pour fournir un service.

6. Système de fourniture de service selon l'une ou l'autre des revendications 4 ou 5, qui comprend en outre un moyen pour surveiller des performances de fourniture de service et pour modifier les conditions mémorisées dans ladite mémoire de données conformément aux performances surveillées.

7. Système de fourniture de service selon la revendication 6, qui comprend en outre un moyen pour mémoriser des demandes de service reçues et pour retraiter une demande de service mémorisée dans le cas où une ou plusieurs conditions mémorisées associées sont modifiées.

8. Environnement informatique réparti comprenant une pluralité de systèmes de fourniture de service selon l'une quelconque des revendications précédentes, dans lequel chacun desdits systèmes, de même qu'au moins une entité ou des entités destinées à fournir un traitement constitutif, est identifié avec une organisation parmi une pluralité d'organisations, ladite pluralité d'organisations définissant ensemble une organisation virtuelle pour la fourniture d'un groupe de services.

9. Environnement informatique réparti selon la revendication 8, dans lequel ladite identification, et donc l'organisation virtuelle, existent pendant une période prédéterminée.

10. Procédé de promulgation d'un traitement d'entreprise, ledit procédé étant mis en oeuvre dans un environnement informatique réparti comprenant au moins un fournisseur de service destiné à fournir un service de traitement d'entreprise et au moins un demandeur de service, dans lequel le service de traitement d'entreprise comprend des traitements constitutifs fournis par les fournisseurs de traitements constitutifs, ledit procédé comprenant :
i) la réception d'une demande de service provenant d'un demandeur de service à l'intérieur dudit environnement,
ii) le traitement de ladite demande pour déterminer une exigence pour ledit service de traitement d'entreprise, et
iii) la fourniture d'une réponse audit demandeur de service
**caractérisé en ce que** le procédé comprend en outre, avant la réception de la demande :
iv) la négociation avec un ou plusieurs fournisseurs de traitements constitutifs pour la fourniture d'un ou plusieurs traitements constitutifs,
v) la mémorisation dans une mémoire de données pouvant être mise à jour de paramètres indicatifs de la capacité actuelle du fournisseur de service à fournir le service, sur la base au moins en partie du résultat de ladite négociation,
et le procédé comprend en outre :
vi) en réponse à la réception de la demande, un accès à la mémoire de données pouvant être mise à jour pour lesdits paramètres indicatifs de la capacité actuelle du fournisseur de service à fournir le service,
la réponse fournie audit demandeur de service étant fondée sur lesdits paramètres.

11. Procédé selon la revendication 10, dans lequel lesdits paramètres sont mémorisés dans la mémoire de données conformément à un mécanisme à dépassement de temporisation.

12. Procédé selon la revendication 11, dans lequel le service demandé comprend un service d'informations dynamique.

13. Procédé selon l'une quelconque des revendications 10, 11 ou 12, dans lequel ladite réponse est choisie à partir d'indications telles que :
a) une capacité suffisante est disponible pour fournir le service,
b) une capacité insuffisante est disponible pour fournir le service, et
c) une capacité suffisante est disponible pour fournir le service s'il est modifié, de même que des modifications associées.

14. Procédé selon l'une quelconque des revendications 10 à 13, qui comprend en outre l'étape consistant à planifier la fourniture du service demandé.

15. Procédé selon la revendication 14, qui comprend en outre, lors d'un échec de ladite étape de planification, une étape choisie parmi :
a) la nouvelle planification d'un ou plusieurs traitements constitutifs,
b) la transmission d'un message audit demandeur de service indiquant que le service demandé à l'origine ne peut être fourni qu'avec des paramètres différents,
c) la relocalisation d'un ou plusieurs traitements constitutifs avec un fournisseur de traitement constitutif différent, ou
d) l'indication audit demandeur de service de ce que le service demandé ne peut pas être fourni.

16. Procédé selon l'une quelconque des revendications 10 à 15 dans lequel, dans le cas où un fournisseur de service et un demandeur de service concluent un contrat pour fournir et recevoir respectivement un service, une copie de contrat est mémorisée sous forme d'une structure de données représentant les termes et les conditions du contrat, à la fois par le fournisseur de service et le demandeur de service.
